# EUROPEAN PATENT SPECIFICATION

(11) **EP 3 574 349 B1**
(45) Date of publication and mention of the grant of the patent: **13.08.2025**
(21) Application number: 18764442.2
(22) Date of filing: 09.03.2018
(51) Int. Cl.: G02B 1/00, G02B 6/44, C08L 53/02, C08F 212/08

(54) **FUSIBLE OIL GEL COMPOSITIONS AND METHODS OF MAKING AND USING SAME**
SCHMELZBARE ÖLGELZUSAMMENSETZUNGEN UND VERFAHREN ZUR HERSTELLUNG UND VERWENDUNG DAVON
COMPOSITIONS DE GEL D'HUILE FUSIBLE ET LEURS PROCÉDÉS DE FABRICATION ET D'UTILISATION

(30) Priority: 10.03.2017 US 201762469858 P
(43) Date of publication of application: 04.12.2019
(73) Proprietor: Kraton Polymers U.S. LLC, Houston, Texas 77084 (US)
(72) Inventor: MARIS, Catherine, A.L., 1435 Mont S. Guibert (BE); MURPHY, Erin, B., Houston TX 77084 (US); BENING, Robert, C., Houston TX 77084 (US); WEI, Xiangyun, Houston TX 77084 (US); MUYLDERMANS, Xavier, D., 1435 Mont S. Guibert (BE)
(74) Representative: Henkel & Partner mbB
(86) International application number: PCT/US2018/021665
(87) International publication number: WO 2018/165505

(56) References cited:
- EP-A1- 0 653 449
- EP-A1- 0 677 065
- EP-A1- 1 732 983
- WO-A2-94/15973
- US-A- 5 242 986
- US-A- 5 242 986
- US-A1- 2009 062 457
- US-A1- 2013 331 479
- US-A1- 2013 331 479
- US-A1- 2015 219 796

## Description

### TECHNICAL FIELD

The present disclosure relates to compositions comprising styrenic block copolymers (SBCs) for use in making cured oil gels and methods of preparing same.

### BACKGROUND

U.S. Patent No. 9,304,231 discloses a gel composition useful in fiber optic cable which has the normal consistency of a grease but which, if desired, will become a rubbery coherent gel upon heating; a method of making the heat-fusible gel, and a method of making a spliceable fiber optic cable, and a fiber optic cable. In the broadest sense, a heat-fusible oil gel composition for fiber optic cable is disclosed, comprising from 50 to 80 wt.% of a grease-like gel based on a hydrocarbon oil containing from 2 to 10 wt.% of an S-EB or S-EP diblock polymer, or a mixture of these diblock copolymers, and from 20 to 50 wt.% of a grease-like gel based on a polar oil containing from 5 to 25 wt.% of an S-EB-S or S-EP-S triblock copolymer, or a mixture of these triblock copolymers.

U.S. Patent No. 6,881,776 discloses two-phase gel compositions obtained by mixing a gelled ester composition comprising a mixture of an ester compound and a polymer compound selected from the group consisting of triblock copolymers, star polymers, radial polymers, multi-block copolymers, and a combination thereof and a hydrophobic, nonpolar solvent. The two-phase gel compositions are also obtained by mixing a gelled ether composition, a gelled alcohol composition, a gelled naturally-occurring fat and oil composition or a combination thereof with a hydrophobic, nonpolar solvent. The two-phase gel compositions may be used to suspend various solids, liquids and/or gases.

EP 1 732 983 A0 discloses gel compositions comprising block copolymers of formula (S-B)ₓ-Y-(B)_{y}, where S is a styrene polymer block, B is a butadiene polymer block, Y is a coupling agent residue and x is from 2-20 and y is from 0-20.

US 2013331479 A1 is directed to a curable composition which is a fluid gel at room temperature and which is converted to a cohesive gel upon curing. It can be employed with cables, fiber optic cables, as a sealant or with other applications.

There exists an ongoing need for improved gel compositions that can provide utility in various applications such as flooding gels for cables.

### BRIEF DESCRIPTION OF DRAWINGS

Figure 1 depicts the viscosity of uncured oil gels as a function of shear rate.
Figure 2 presents a photo of uncured oil gel.
Figure 3 presents a photo of cured oil gel.

### SUMMARY

In one aspect, the present invention relates to a cured gel composition in accordance with claim 1.

In another aspect, the present invention relates to a method in accordance with claim 12.

The cured gel composition may be introduced into an interior volume or void space of a cable, for example a fiber optic cable, and curing the composition disposed within the cable to form an elastic solid material.

### DESCRIPTION

Molecular weights described herein are polystyrene equivalent molecular weights and can be measured by Gel Permeation Chromatography (GPC), where the GPC system has been appropriately calibrated, unless otherwise specified, the reported values represent the molecular weight at the peak of the distribution, sometimes referred to as peak molecular weight. Polymers of known molecular weight are used for calibration and these must be of the same molecular structure and chemical composition as the unknown polymers that are to be measured.

"Vinyl" is used to describe the polymer product that is made when 1,3-butadiene is polymerized via a 1,2-addition mechanism. The result is a monosubstituted olefin group pendant to the polymer backbone, a vinyl group.

"Thixotropic behavior" or "thixotropic character" means that a composition should exhibit high apparent viscosity at low shear and much lower viscosity at high shear, and also does not drain freely from a vertical surface.

"Solid" as referring to the gel composition means the composition is firm and stable in shape, e.g., an elastic gel.

The polystyrene content (PSC) in block copolymers may be determined using proton nuclear magnetic resonance (NMR).

Viscosities can be measured by a Haake Rheostress 150 rheometer in plate/cone geometry equipped with a Peltier TC81 hot plate. The cone has a diameter of 20 mm and an angle of 1°. A shear ramp was applied and shear rates at 20 s⁻¹ and 100 s⁻¹ are reported.

Viscosity can be measured using Brookfield viscometer for uncured samples, and Ares rheometer can be used to measure viscosity of cured samples. Oil bleeding data can be collected by cone method at 100 °C for 24 hours.

Disclosed herein are methods for the preparation of a cured oil gel. The cured gel composition comprising: (i) a styrenic block copolymer, (ii) 70 wt.% to 99 wt.% oil wherein the diblock polymer styrenic block copolymer has the structure ABi or iAB and comprises: a monoalkenyl arene block, designated A, which has an apparent average peak molecular weight of 3 kg/mole to 100 kg/mol a conjugated diene block, designated B, which has an apparent average peak molecular weight of 30 kg/mol to 300 kg/mol isoprene attachment, designated i; the isoprene attachment i is substantially unsaturated and B is substantially saturated the gel composition before curing is thixotropic with a viscosity at 25°C at a shear rate of 20 s' 1 ranging from 5000 mPa.s to 30000 mPa.s. the cured gel composition after curing by thermal curing or UV curing or both, is solid which means that it is firm and stable in shape, or has a viscosity at 25 °C at a shear rate of 20 s' 1 of at least 30000 mPa.s Transformation of the thixotropic blend to an elastic solid material may be accomplished by curing such as thermal curing or UV curing. In some aspects, the composition additionally comprises a material to facilitate curing of the compositions such as an initiator.

In an aspect, the A block of the diblock copolymer is formed from monomers comprising styrene, alpha-methylstyrene, para-methylstyrene, vinyl toluene, vinylnaphthalene, diphenyl ethylene, para-butyl styrene, or mixtures thereof; alternatively the A block is formed from monomers comprising, consisting of, or consisting essentially of styrene.

In an aspect, a diblock copolymer (e.g., iAB or ABi) has a polystyrene content of from about 2% to about 50%, alternatively from about 2% to about 45%, alternatively from about 10% to about 40% or alternatively from about 20% to about 40%.

In an aspect, the B block of the diblock copolymer is formed from monomers comprising a conjugated 1,3-butadiene or conjugated substituted butadienes such as, piperylene, 2,3-dimethyl-1,3-butadiene, 1-phenyl-1,3-butadiene or mixtures thereof.

The iAB comprises an isoprene attachment, referred to herein as an isoprene tail. The isoprene attachment refers an isoprene polymer. It is to be understood that in the disclosure the "isoprene tail" may be attached to either A or B block. The isoprene tail can be associated with either the A block and designated iAB or with the B block and designated ABi and can be prepared by anionic polymerization. A short isoprene tail attached to the polystyrene block remains partially unsaturated after hydrogenation of the block copolymer. In an aspect, the short isoprene tail has a molecular weight of from about 2 kg/mol to about 15 kg/mol. Without wishing to be limited by theory, the isoprene tail may facilitate curing of the polymer composition.

In an aspect, the diblock copolymer (e.g., iAB or ABi) comprises less than about 5 wt.% of a triblock copolymer (e.g., ABA) based on the total weight of the diblock copolymer, alternatively less than about 2 wt.%, or alternatively less than about 1 wt.%. In an aspect, a diblock copolymer suitable for use in the present disclosure (e.g., iAB) excludes a triblock copolymer.

Polymerization conditions to prepare a diblock copolymer of the type disclosed herein (e.g., iAB) are similar to those used for anionic polymerizations. For example, the polymerization may be carried out at a temperature of from about -30 °C to about 150 °C in an inert atmosphere such as nitrogen, under a pressure within the range of from about 0.5 to about 10 bars. Suitable reaction conditions also include one or more polymerization initiators, for example, alkyl lithium compounds such as s-butyllithium, n-butyllithium, t-butyllithium, amyllithium and the like.

The diblock copolymers (e.g., iAB) may be subjected to post-polymerization hydrogenation. In an aspect, the diblock copolymers are subjected to selective hydrogenation of the diene portions of the copolymer to produce a partially hydrogenated diblock copolymer. In an aspect, at least 75% of the double bond, including at least any of 90%, 95%, or 98% of the vinyl substituents resulting from 1,2 addition, are hydrogenated, while about 20% to less than any of 35, 40, 50, or 60% of the double bonds in the isoprene tail are hydrogenated. In one embodiment, about 30% to about 50% of the double bonds in the isoprene tail are hydrogenated. In an aspect, hydrogenation of a diblock copolymer of the type disclosed herein results in a percent conversion (hydrogenation level) of the B block, herein designated α, and a percent conversion of the isoprene tail, herein designated β, where α is greater than β.

In an aspect, the difference in the hydrogenation level the B block and isoprene tail is equal to or greater than about 20%, alternatively equal to or greater than about 50%, alternatively from about 20% to about 80%, or alternatively from about 29% to about 69%. In another aspect, the total residual unsaturation (RU) is less than or equal to 2.5 milliequivilent per gram (meq/g) as measured by ¹H NMR or ozone titration. In another aspect, a block copolymer of the type disclosed herein has a RU of from about 0.2 to about 4, alternatively from about 0.4 to about 3. Without wishing to be limited by theory, this may ensure sufficient reactivity to provide the crosslinking needed to achieve the objectives of the present disclosure while providing a sufficient decrease in residual unsaturation in the B block to realize the benefits of hydrogenation. Hydrogenation of the diblock copolymers generally improves thermal stability, ultraviolet light stability, oxidative stability, and weatherability of the final polymer. Hydrogenation can be carried out using any suitable methodology known in the art, as disclosed in U.S. Pat. Nos. 3,595,942; 3,634,549; 3,670,054; 3,700,633; and Re. 27,145. These methods operate to hydrogenate polymers containing aromatic or ethylenic unsaturation and are based upon operation of a suitable catalyst. Such catalyst, or catalyst precursor, can comprise a Group VIII metal such as nickel or cobalt which is combined with a suitable reducing agent such as an aluminum alkyl or hydride of a metal selected from Groups I-A, II-A and III-B of the Periodic Table of the Elements, such as lithium, magnesium or aluminum.

In an aspect of the present disclosure, a diblock copolymer which is an isoprenestyrene/butadiene (i-S/B) polymer is synthesized. Upon hydrogenation, the butadiene is hydrogenated while the isoprene tail is only partially hydrogenated (e.g., designated i-S/EB). The unsaturation remaining in the isoprene tail can then be cured/crosslinked to transform an oil gel, of the type disclosed herein, from a thixotropic blend into a solid gel.

The diblock copolymer of the type disclosed herein (e.g., iAB) is present in the oil gel in an amount of from about 1 wt.% to about 30 wt.% based on the total weight of the oil gel, alternatively in an amount of from about 3 wt.% to about 15 wt.% based on the total weight of the oil gel, alternatively in an amount of about 6 wt.%, or alternatively about 8 wt.% based on the total weight of the oil gel.

A cured oil gel of the present disclosure comprises an oil such as paraffinic oils, mineral oils, gas to liquid (GTL) oils, synthetic oils, or combinations thereof. In an aspect, the oil of the oil gel comprises a paraffinic oil. In some aspects, the paraffinic oil includes an oilenriched in paraffin. Alternatively, a paraffinic oil is characterized by the presence of hydrocarbons having from 12 carbon atoms to 50 carbon atoms. Alternatively, the paraffinic oil includes a paraffin having an average number of carbon atoms that is less than or equal to about 20 (e.g., 16). In certain aspects, the paraffinic oil includes a paraffin having an average number of carbon atoms of from 16 to 30. In some aspects, a paraffinic oil suitable for use in the present disclosure can be a mixture of oils.

In an aspect, the oil of the cured oil gel comprises a mineral oil. Mineral oils are highly refined, colorless, and odorless petroleum oils. Mineral oil (also known as liquid petrolatum) is a by-product in the distillation of petroleum to produce gasoline. Mineral oil is a chemically inert oil composed mainly of linear, branched, and cyclic alkanes (paraffins) of various molecular weights.

In an aspect, the oil of the cured oil gel comprises a GTL-based process oil. GTL-based process oil is also referred to as Fischer-Tropsch derived oil. The term "Fischer-Tropsch derived" refers to a base oil, that is or is derived from, a synthesis product of a Fischer-Tropsch process. GTL-based process oils have a uniform chemical structure because they are manufactured from hydrocarbons derived from natural gas rather than crude oil.

In an aspect, the oil of the cured oil gel comprises a synthetic oil. Herein a synthetic oil refer to those oils that include non-naturally occurring components derived through chemical processes.

In an aspect, the cured oil gel comprises a mineral oil, a synthetic oil, or paraffinic fluids; or an internal olefin. Alternatively, the oil gel comprises a low toxicity synthetic oil, alternatively paraffinic oil, or alternatively internal olefin fluids such as C₁₆-C₁₈ internal olefin hydrocarbons. Suitable mineral oils may be naphthenic- or paraffinic-based. In some aspects, the oil comprises diesel, biodiesel and carboxylic acid esters such as 2-ethylhexyl oleate. Other nonlimiting examples of oils suitable for use in the present disclosure include a white mineral oil such as DRAKEOL34. In an aspect, the oil is a GTL-based process oil, e.g., a hydrocarbon fluid based on Gas-to-Liquid technology that is highly saturated with a high degree of isoparaffinic structures.

An oil of the type disclosed herein (e.g., paraffinic, mineral, GTL, etc.) is present in the oil gel in an amount of from about 70 wt % to about 99 wt% alternatively from about 85 wt% to about 97 wt% based on the total weight of the oil gel.

Oil gels of the type disclosed herein may optionally comprise an antioxidant. For example, antioxidants and other stabilizing ingredients can be added to protect the oil gel from degradation induced by heat, light and processing or during storage. Several types of antioxidants can be used, either primary antioxidants like hindered phenols or secondary antioxidants like phosphite derivatives or blends thereof. Examples of antioxidants suitable for use in the present disclosure are sterically hindered phenol type antioxidants and liquid phenolic antioxidants.

In some aspects, the cured oil gel optionally comprises a metal deactivator. Examples of suitable metal deactivators include REOMEL 39 LF and other commercially available products known in this field.

In some aspects, cured the oil gel optionally comprises a rheology modifier. Rheology modifiers may be included in the oil gel to meet one or more user or process goals, such as the adjusting the flow properties of the oil gel. In aspect, the rheology modifier is an inorganic material such as fumed silica or specialty clays such as attapulgites, and the like. A nonlimiting example of a rheology modifier is CABOSIL TS720 from Cabot Corp.

In an aspect, the cured oil gel may comprise additives of the type disclosed herein in amounts ranging from about 0.001 wt.% to about 5 wt% based on the total weight of the oil gel.

In an aspect, the cured oil gel an oil gel comprising a diblock copolymer (e.g., iAB), an oil, and optionally additives, all of the type disclosed herein, may be prepared by contacting the diblock copolymer with the oil. For example, the diblock copolymer may be present in the oil gel in an amount ranging from about 1 wt.% to about 30 wt.% alternatively ranging from about 2 wt.% to about 20 wt.% or alternatively ranging from about 3 wt.% to about 15 wt.%. Consequently, the oil gel may have an SBC:oil ratio of from about 0.01:1 to about 0.3:1 alternatively from about 0.02:1 to about 0.2:1 or alternatively from about 0.03:1 to about 0.15:1.

The cured oil gel has a viscosity at 25 °C at a shear rate of 20 s⁻¹ ranging from about 500 mPa.s. to about 30000 or alternatively from about 1500 mPa.s to about 27000 mPa.s as determined by rheometry. In an aspect, contacting the diblock copolymer and the oil yields a cured oil gel in the form of a thixotropic blend. Thixotropic refers to the shear thinning behavior of the material. A method of the present disclosure may further comprise subjecting the thixotropic blend to one or more techniques that transforms the thixotropic blend into a solid material.

Transformation of the thixotropic blend to a solid material is effected by curing. Curing of the thixotropic blend may be carried out by ultraviolet (UV) irradiation or by thermal treatment.

The oil gel (e.g., thixotropic blend) is contacted with a curable functional compound to form a curing composition, and subsequently cured by UV radiation to form a cured solid material (CSM). The curable functional compound can be made up of monomers of aliphatic polyol acrylates or methacrylates. In an aspect, the curable functional compound includes monomers having one or more, alternatively two, acrylate or methacrylate groups. Examples of curable compounds suitable for use in the present disclosure include without limitation one or more of 1,4-butanediol diacrylate, 1,6-hexanediol diacrylate, 1,6-hexanediol dimethacrylate, 1,12-dodecanediol dimethacrylate, trimethylol propane triacrylate, or dipentaerythritol monohydroxy-pentaacrylate. In some aspects, the curable functional compound will include hexanediol diacrylate, hexanediol dimethylacrylate or butanediol diacrylate.

In an aspect, the curable functional compound comprises 1,6 hexanediol diacrylate and may be contacted with the oil gel in an amount of from about 3.0 wt.% to about 15 wt.% or alternatively from about 4 wt.% to about 10 wt.% based on the total weight of the oil gel.

The curing composition can be cured with natural or artificial UV radiation. In an alternative aspect, the curing composition is cured with an electron beam. The curing composition can be crosslinked within a cable (for example, a thin UV transparent cable) to become a cohesive solid material. The curing composition can be crosslinked within the cable by exposing the curing composition to UV radiation to form a solid composition that is cohesive within the cable. The curing composition forms a solid composition, designated the cured solid material (CSM) and will not flow within or from the cable when, for instance, the cable is cut.

In aspects where the curing composition comprises a curable compound, the oil gel may have a viscosity at 25 °C at a shear rate of 20 s⁻¹ ranging from about 5000 mPa.s to about 600000 mPa.s as determined by rheometry.

In an aspect, the oil gel (e.g., thixotropic blend) is contacted with one or more initiators to form a second mixture (e.g., a curing composition) and subsequently cured by a thermal treatment to form a CSM. For example the oil gel may be contacted with a photoinitiator, such as IRGACURE 651 from BASF, in an amount of from about 0.2 wt.% to about 2 wt.% based on the total weight of the oil gel.

In an aspect, the composition comprising the oil gel and initiator is subjected to a thermal treatment. Thermal treatment may include subjecting the oil gel to an elevated temperature for a sufficient time to effectuate curing of the oil gel to form a CSM. For example, the oil gel may be heated to a temperature ranging from about 150°C to about 200°C or alternatively, about 160°C to about 190°C for a period of time ranging from about 1 minutes to about 20 minutes or alternatively, about 5 minutes to about 15 minutes. For example, the composition comprising the oil gel and initiator may be introduced to the cable in a time period after extrusion of the cable but prior to dissipation of the heat associated with the extrusion of the cable such that the residual heat associated with extrusion is sufficient to cure the material (e.g., oil gel and initiator) disposed within the cable.

In an aspect, the initiator comprises a thermal initiator, that is, a radical initiator which decomposes at a certain temperature to form radicals. In some aspects, the curing composition comprises the oil gel, a diacrylate (e.g., HDDA), and a thermal initiator. Nonlimiting examples of thermal radical initiators are peroxide compounds and azo compounds. A thermal radical initiator suitable for use in the present disclosure may have a half-life (τ_{1/2}) of from about 1 minute to about 10 minutes or alternatively from about 1 minute to about 6 minutes. Herein the half-life refers to the time after which the quantity of material decomposes to one half of its original value.

Azo compounds and peroxy compounds suitable for use in the present disclosure are additionally described in the Encyclopedia of Polymer Science and Engineering, John Wiley & Sons (1988), volume 2, pages 143-157 and volume 11, pages 1-21 respectively. In an aspect, the thermal radical initiators comprise those initiators that are commonly used in the radical polymerization of styrene to manufacture polystyrene. Nonlimiting examples of commercially available compounds include (2,2'-azobis(isobutyronitri-le); 2,2'-azobis(2,4-dimethylvaleronitrile); 1,1'-azobis-(cyclohexanecarbo-nitrile); benzoyl peroxide; t-butyl 2-methylperbenzoate; dicumyl peroxide; t-butyl cumyl peroxide; di-t-butylperoxide; 1,1-di(t-butyl-peroxy)-3,3,5-trimethylcyclohexane; dilauroyl peroxide; di(2-ethylhexyl)peroxydicarbonat-e; t-amyl peroctoate; t-butyl peracetate; t-butyl perbenzoate; 2,5-bis(benzoyl-peroxy)-2,5-dimethylhexane; di-t-butyldiperoxyazelate; 1,1-di(t-butylperoxy)cyclohexane, or combinations thereof.

The resulting curing composition including an oil gel and a thermal initiator as disclosed herein, can further comprise an aliphatic or cycloaliphatic diluent (e.g., processing aids, plasticisers, liquid resins, extending oils), or a mixture of diluents, compatible with the components of the oil gel. Suitable aliphatic and cycloaliphatic plasticizer or extending oils (collectively referred to herein as "diluent") can include, but are not limited to the following: paraffinic process oils; naphthenic oils; fully or highly hydrogenated process oils; waxes; liquid hydrogenated aromatic resins; liquid polyalphaolefins; and liquid polymers such as hydrogenated polyisoprene, hydrogenated polybutadiene or polybutene-1. Said diluent may be added to the oil gel (e.g., the thixotropic blend) prior to the curing thereof.

In other aspects, the diluent may be 50% or more of the composition by weight, 75% or more of the composition by weight, 85% or more of the composition by weight, 90% or more of the composition by weight, and still further 93% or more of the composition by weight, to 95% of the composition by weight. The amount of diluent will depend on the end use application. While such ranges are useful for compositions for use as fillers in cables, the amount of diluent will depend on the end use application. For example, sealants may use less than 50% of a diluent.

Examples of diluents suitable for use in the curing compositions herein disclosed include, but are not limited to white mineral oil, an oligomer of polyvinyl type such as polybutene, hydrogenated polybutene, hydrogenated alpha-olefin oligomer or atactic polypropylene; an aromatic oligomer such as biphenyl or triphenyl, and its complete or partial hydrogenation products; a hydrogenated polyene oligomer such as hydrogenated liquid polybutadiene; a paraffin such as paraffin oil or chlorinated paraffin; a cycloparaffin such as naphthene oil; a phthalic acid ester such as dibutyl phthalate, diheptyl phthalate, di(2-ethylhexyl)phthalate, butylbenzyl phthalate, di-n-octyl phthalate, diisononyl phthalate, diisodecyl phthalate or diundecyl phthalate; a nonaromatic dibasic acid ester such as di(2-ethylhexyl) adipate, di-n-octyl adipate, diisononyl adipate, diisodecyl adipate, di(2-ethylhexyl)sebacate or di-2-ethylhexyl tetrahydrophthalate; an aromatic ester such as tri-2-ethylhexyl trimellitate or triisodecyl trimellitate; a fatty acid ester such as butyl oleate, methyl acetylrecinolate or pentaerythritol ester; a polyalkylene glycol ester such as diethylene glycol benzoate or triethylene glycol dibenzoate; a phosphoric acid ester such tricresyl phosphate or tributyl phosphate; an epoxy plasticizer such as epoxidated soybean oil or epoxidated linseed oil; an alkylsulphonic phenyl ester and the like. These may be used alone or in admixture thereof.

The curing composition can further comprise a resin, depending on the end use application. The resin may be partially or fully hydrogenated aliphatic hydrocarbon resins, hydrogenated rosin ester or partially or fully hydrogenated aromatic hydrocarbon resins. A resin may be added to the oil gel (e.g., the thixotropic blend) prior to the curing thereof. Suitable resins can include, but are not limited to the following: hydrogenated styrene-based resins; a 60% hydrogenated aromatic resin; hydrogenated resins based on C₅ and/or C₉ hydrocarbon; hydrogenated polycyclopentadienes; hydrogenated polyterpene and other naturally occurring resins.

The resin may be present in the curable polymeric composition an amount of from about 1% to about 15% by weight or alternatively about 1% to about 5% by weight based on the total weight of the curing composition.

Stabilizers such as antioxidants/UV stabilizers/radical scavengers including, but not limited to phenols, organo-metallic compounds, aromatic amines, aromatic phosphites and sulfur compounds can also be added to the curable polymeric composition. Other examples of stabilizers can include phenolic antioxidants, thio compounds and tris(alkyl-phenyl)phosphites. Stabilizers may be added to the oil gel (e.g., the thixotropic blend) prior to the curing thereof.

Examples of commercially available antioxidants/radical scavengers are pentaerythrityl-tetrakis(3,5-di-tert-butyl-4-hydroxy-hydrocinnamate); octadecyl ester of 3,5-bis(1,1-di-methylethyl)-4-hydroxy benzene propanoic acid; 2,4-bis(n-octyl-thio)-6-(4-hydrox-y-3,5-di-tert-butylanilino)-1,3,5-triaz-ine; 2-tert-butyl-6-(3-tert-butyl-2'-hydroxy-5-methylbenzyl)-4-methylphenyl acrylate; tris(nonylphenyl)phosphite; tris(mixed mono- and di-phenyl)-phosphite; bis(2,4-di-tert-butylphenyl)-pentaerythritol diphosphate; distearyl pentaerythritol diphosphite; styrenated diphenylamine; N-1,3-dimethylbutyl-N'-phen-yl-paraphenylenediamine; tris(2,4-di-tert-butylphenyl) phosphite; and 4,4-butylidene-bis-(3-methyl-6-tert-butylphenol).

The stabilizer may be present in the curable polymeric composition in a total amount from 0.01 to 5% by weight, basis the total curable polymeric composition or alternatively 0.1% to 3% by weight.

In some aspects, the curing composition comprises a curing accelerator. Any curing accelerator compatible with the compositions of the present disclosure may be employed. For example, the curing accelerator is a composition comprising at least one dithiocarbamate, at least one thiazole, and at least one guanidine compound. In an aspect, the dithiocarbamate compound comprises zinc diethyldithiocarbamate, the thiazole compound comprises zinc 2-mercaptobenzothiazole, also known as zinc dimercaptobenzothiazole and the guanidine compound comprises diphenyl guanidine, also known as DPG. Other dithiocarbamate, thiazole and guanidine derivatives can also be use in accordance with the present diclosue, provided each is chemically compatible with, i.e., does not substantially interfere with the functionality of, the remaining two accelerator compounds used. Dithiocarbamate derivatives which can also be used include zinc dimethyldithiocarbamate, sodium dimethyldithiocarbamate, bismuth dimethyldithiocarbamate, calcium dimethyldithiocarbamate, copper dimethyldithiocarbamate, lead dimethyldithiocarbamate, selenium dimethyldithiocarbamate, sodium diethyldithiocarbamate, ammonium diethyldithiocarbamate, copper diethyldithiocarbamate, lead diethyldithiocarbamate, selenium diethyldithiocarbamate, tellurium diethyldithiocarbamate, zinc dibutyldithiocarbamate, sodium dibutyldithiocarbamate, dibutyl ammonium dibutyldithiocarbamate, zinc dibenzyldithiocarbamate, zinc methylphenyl dithiocarbamate, zinc ethylphenyl dithiocarbamate, zinc pentamethylene dithiocarbamate, calcium pentamethylene dithiocarbamate, lead pentamethylene dithiocarbamate, sodium pentamethylene dithiocarbamate, piperidine pentamethylene dithiocarbamate, and zinc lopetidene dithiocarbamate. Other thiazole derivatives which can be used include 2-mercaptobenzothiazole, copper dimercaptobenzothiazole, benzothiazyl disulphide, and 2-(2',4'-dinitrophenylthio) benzothiazole. Other guanidine derivatives which can be used include diphenyl guanidine acetate, diphenyl guanidine oxalate, diphenyl guanidine phthalate, di-o-tolyl guanidine, phenyl-o-tolyl guanidine, and triphenyl guanidine. Additional commonly used curing accelerators are amine accelerators, cobalt accelerators, and cobalt alternative accelerators. In an aspect, the curing composition may comprise a curing accelerator in an amount of from 0.1% to 3% by weight based upon the total weight of the curing composition.

In an aspect, the oil gel is combined with an initiator, and one or more optional additives to obtain a curing composition that is a thixotropic blend for use in cable filling compositions and subsequently transformed via curing into a CSM. In another aspect, the compositions of the present disclosure could be used as a filling or protectant material for cables, including fiber optic cables. In another aspect, the oil gels and/or CSMs disclosed herein may be components of an oilfield servicing composition such as insulating packer fluids, transportation slurries, drilling muds, and drill-in fluids. Alternatively, the oil gels and/or CSMs may function as an additive for personal care products such as cosmetic oils and greases. Additional nonlimiting examples of materials that may include an oil gel and/or CSM of the type disclosed herein are heat transfer fluids, cleaning and degreasing agents, process oils, agricultural gels for seeds, crop protection and grain dust suppression, textile coatings, concrete molds, shoe polish, paint, paint remover, furniture oils, wood preservatives, heating or fuel, potting gels (LED, Seismic, etc.), base stock oils, shock absorber fluids, compressor oils, lubricants, and metal working fluids.

EXAMPLES: The subject matter of the present disclosure having been generally described, the following examples are given as particular aspects of the disclosure and to demonstrate the practice and advantages thereof. It is understood that the examples are given by way of illustration and are not intended to limit the specification or the claims to follow in any manner.

Example 1: The materials used in this example are listed in Table 1.

**Table 1**

| Trade name | Description / source |
|---|---|
| SBC diblock | Styrene-ethylene/propylene (S-E/P) block copolymer, 35% PSC, Residual unsaturation < 0.12 meq/g |
| Polymer 1 | Partially unsaturated Kraton G block copolymer, with short isoprene tail attached to PS block (i-S-E/B), 38% PSC, 2.05% meq/g total RU (residual unsaturation); RU in isoprene block = 0.47 meq/g (50% of initial), RU in butadiene block = 1.57 meq/g (21% of initial) |
| Primol 352 | medicinal, white oil, ExxonMobil |
| HDDA | 1.6-hexanediol diacrylate, Aldrich |
| Luperox DCP | solid peroxide, activation temperature = 170°C, melting temperature = 50°C, half lifetime at 180°C = 1 min, half lifetime at 160°C = 6 min, Arkema |
| Irgacure 651 | 2,2 dimethoxy-1,2 diphenylethan-1-one, photo initiator, BASF |
| Irganox 1010 | primary anti-oxidant, hindered phenol, BASF |

Oil gels were typically prepared by heating the oil and anti-oxidant to 130°C, then incorporating the diblock copolymer under high or low shear mixing. During mixing, the temperature was raised to 160°C for a short period of time. After full incorporation of the block copolymer in the oil gel and obtaining a homogeneous oil gel, other ingredients such as HDDA, Luperox DCP or Irgacure 651 was added. Addition of HDDA was done at low shear, upon cooling of the gel to 120°C. Luperox DCP was incorporated at 60°C and the blends tumbled for 1 night to ensure full incorporation and dispersion in the system. Thermal curing with this peroxide was done in an oven at 190°C for a period of 10 minutes.

Irgacure 651 was added to allow for UV curing of the oil gels. Samples with a size of ± 10 cm² and a weight of 5 g were cured with a UV mercury medium pressure lamp. Samples were passed 6 times under the lamp at a speed of 5 m/min to ensure full curing. After each pass, the samples were turned upside down. A UV compact radiometer was used to check the UV dose corresponding to the curing process. Each sample side was subjected to 10000 mJ/cm². A second series of samples was subjected to 30000 mJ/cm².

After preparation, the aspect and homogeneity of the gels were checked visually and their viscosity measured at 25°C, at shear rates of 20 s-1 and 100 s⁻¹ Table 3. Oil gels of paraffinic oil, 8% weight of SBC diblock or Polymer 1, peroxide or photo initiator, were prepared respectively for thermal and UV curing. These blends were made with and without diacrylate (HDDA).

Before curing, all formulations were thixotropic blends as indicated by the significant difference in rheology at low shear (20 s⁻¹) and at 100 s⁻¹.

Thermal curing of the oil gels containing Polymer 1 led to solid gels, also in the absence of HDDA. The presence of HDDA further enhanced viscosity as well as strength. UV curing led to rubbery, solid gels. In presence of HDDA, the viscosity after curing was significantly higher than without HDDA. Increasing the UV curing dose did not lead to a further raise in viscosity. A raise in viscosity was achieved by thermal curing of the oil gel based on the SBC diblock polymer. The system however remained a grease and didn't turn into a strong gel. The results are presented in Table 2.

**Table 2**

| | **Sample number** | | **1** | **2** | **3** | **4** | **5** | | **6** | |
|---|---|---|---|---|---|---|---|---|---|---|
| | SBC diblock | | 8.0 | 8.0 | - | - | - | | - | |
| | Polymer 1 | | - | - | 8.0 | 8.0 | 8.0 | | 8.0 | |
| | Irgacure 651 | | - | - | - | - | 0.3 | | 0.3 | |
| | Primol 352 | | 91.9 | 84.9 | 89.9 | 84.9 | 91.6 | | 86.6 | |
| | HDDA | | - | 5.0 | - | 5.0 | - | | 5.0 | |
| | Luperox DCP | | | 2.0 | 2.0 | 2.0 | - | | - | |
| | Irganox 1010 | | 0.1 | 0.1 | 0.1 | 0.1 | 0.1 | | 0.1 | |

| | Properties | | | | | | | | | |
|---|---|---|---|---|---|---|---|---|---|---|
| Viscosity at 25°C mPa.s | | | | | | | | | | |
| | before curing, at a shear rate of | | | | | | | | | |
| | | 20 s⁻¹ | 8200 | 5900 | 19600 | 12000 | | 20000 | | 11200 |
| | | 100 s⁻¹ | 6100 | 3500 | 9200 | 6000 | 8800 | | 5800 | |
| | Curing technique | | - | thermal | Thermal | | UV 10000 mJ/m² | UV 30000 mJ/m² | UV 10000 mJ/m² | UV 30000 mJ/m² |
| Viscosity at 25°C mPa.s | | | | | | | | | | |
| | after curing, at a shear rate of | | | | | | | | | |
| | | 20 s⁻¹ | n.a. | 32400 | 70800 | 120000 | 37000 | 36000 | 105000 | 102000 |
| | | 100 s⁻¹ | n.a. | 9700 | 15800 | 31000 | 9600 | 7600 | 27000 | 17200 |
| Gel Content (wt.%) | | | n.a. | n.m. | 17 | 23 | 8 | | 19 | |
| Oil gel aspect after curing | | | grease | grease | solid | solid | Solid | | Solid | |

Example 2: A diblock copolymer of the type disclosed herein (e.g., ABi) with block molecular weight of 43k-52k-10k was prepared. Hydrogenation was run in batch process using Co catalyst with Al/Co ratio of 2.0. The final residual unsaturation (RU) is 0.97. As shown in Table 3, excellent hydrogenation selectivity between isoprene and butadiene has been achieved. More than 96% of RU is in isoprene block, while the B block contains negligible amount of RU. The polymer, designated Polymer 2, was finished using cyclone without any issues.

**Table 3**

| | RU (meq/g) | Hydrogenation level |
|---|---|---|
| 3,4- Ip | 0.05 | 27% |
| 1,4- Ip | 0.89 | 31% |
| 1,2- Bd | 0.01 | 100% |
| 1,4- Bd | 0.03 | 99% |
| Total | 0.97 | 91% |

Oil gels were prepared using the amounts of material as indicated in Table 4. Initially, the samples had typical oil gel formulation, i.e. with 8% polymer loading. But the oil gel with 8% polymer was a very thick grease at room temperature, and was not pourable thus the polymer loading was decreased to 6%, which became pourable and looks like a typical oil gel. Formulations with 6% polymer with various amounts of peroxide were also made to evaluate the effects of cross-linking.

**Table 4**

| Sample | Block copolymer | PRIMOL 352 | Antioxidant | Initiator |
|---|---|---|---|---|
| | wt.% | | | |
| 7 | 8 | 91.9 | 0.1 | - |
| 8 | 7 | 92.9 | 0.1 | - |
| 9 | 6 | 93.9 | 0.1 | - |
| 10 | 6 | 93.7 | 0.1 | 0.2 |
| 11 | 6 | 93.5 | 0.1 | 0.4 |
| 12 | 6 | 93.3 | 0.1 | 0.6 |
| 13 | 6 | 93.1 | 0.1 | 0.8 |

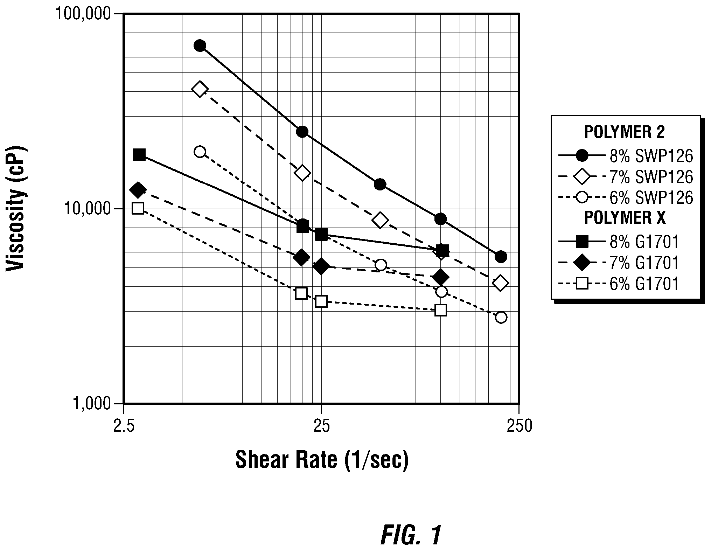

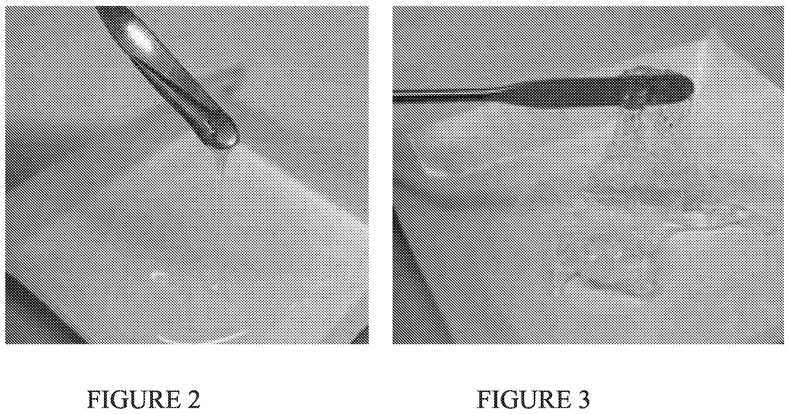

Oil gels were prepared by mixing oil, polymer and antioxidant at 130 °C, rotor/stator mixer under high shear (~2,000 rpm) for about one hour. Once the mixture became homogeneous and was cooled to 70 °C, peroxide was added. Figure 1 shows the viscosity of uncured oil gels as a function of shear rate. Oil gels made with a Polymer 2 exhibited more shear thinning than oil gels made with a commercially available diblock copolymer, designated Polymer X. At low shear rate, 6% loading of Polymer 2 has about the same viscosity as 8% loading of Polymer X. At high shear rate, where pumpability is measured, 6% loading of Polymer 2 has much lower viscosity than 8% loading of Polymer X. An 8% loading of Polymer 2 should still have about the same pumpability as an 8% loading of Polymer X. The enhanced shear thinning observed with Polymer 2 may be caused by larger styrene block size, and is likely a desirable feature. Figure 2 presents a photo of uncured oil gels. Figure 3 presents a photo of cured oil gels, wherein the oil gel is still solid but as an elastic "gel."

Oil gels were cured in an oven at 190 °C for 10, 20, 30, and 40 minutes. Curing time here refers to the time oil gel samples sit inside an oven, the actual curing time is shorter because it takes some time for the oil gel samples to reach the oven temperature. At 10 minutes, oil gels are still pourable, while at 20-40 minutes, oil gel samples are solid. Table 5 compares oil gels before and after curing. Clearly, curing alters oil gel properties, sometimes drastically, in many aspects: (1) appearance changes from a pourable gel to an elastic solid; (2) there are significant amounts of high molecular weight polymer species after curing; (3) viscosity increases from ~9,000 cP to more than 1,600,000 cP; (4) oil bleeding decreases from 96% to basically 0%.

**Table 5**

| | 126-1E 6% polymer + 0.4% peroxide | | 126-1G 6% polymer + 0.8% peroxide | |
|---|---|---|---|---|
| | Before | After | Before | After |
| Appearance | Pourable gel | Elastic solid | Pourable gel | Elastic solid |
| Viscosity (cP at 20/s on Brookfield) | 9,048 | 1.66 x 10⁶ (20 °C) * | 8,096 | 1.76 x 10⁶ (20 °C) * |
| | | 1.63 x 10⁶ (120 °C) * | | 1.69 x 10⁶ (120 °C) * |
| Oil Bleeding (100 °C 24hr) | 96.5% | -1.1% | 96.3% | -0.5% |
| MW (GPC) | 237k, 3.3% | 435k, 11.3% | 237k, 3.3% | 354k, 17.2% |
| | | 371k, 7.2% | | 247k, 14.7% |
| | 140k, 93.6% | 261k, 14.0% | 140k, 93.6% | 127k, 51.5% |
| | | 133k, 42.3% | | 33k, 13% |
| | | 36k, 13.6% | | |
| Insolubles in toluene | | 0% | | 0% |

| | | | | |
|---|---|---|---|---|
| *Data collected on ARES parallel plates at 0.1 rad/sec | | | | |

Oil gels after curing were elastic solids, therefore are not suitable for viscosity measurement on Brookfield viscometer, and ARES rheometer was used for viscosity measurement. Although it is not appropriate to directly compare viscosity data before and after curing (because the data were collected on different equipment), the large viscosity numbers of cured samples confirm that they are a soft solid. More importantly, viscosity of the cured samples remains high even when heated to 120 °C. This behavior itself was also an indication of cohesive oil gels. Uncured samples behave very differently, and they lose viscosity and become liquid when heated to 100 °C.

Cured oil gels made with Polymer 2 have zero insolubles in toluene, suggesting that little or no polymer network has been formed. GPC data confirms that only light crosslinking occurred. Cured samples contain about one third of high molecular weight polymers, that may include large SEBS molecules (2x, 3x and 4x) formed by light cross-linking of isoprene. Further, after curing, there is also a significant amount of low molecular weight species, suggesting some polymer chain scission occurred.

## Claims

1. A cured gel composition comprising: (i) a styrenic block copolymer, (ii) an oil; and (iii) optional additives;
wherein the styrenic block copolymer has the structure ABi or iAB and comprises:
a monoalkenyl arene block, designated A, which has an apparent average peak molecular weight of 3 kg/mole to 100 kg/mol as measured by gel permeation chromatography as polystyrene equivalent molecular weight;
a conjugated diene block, designated B, which has an apparent average peak molecular weight of 30 kg/mol to 300 kg/mol as measured by gel permeation chromatography as polystyrene equivalent molecular weight;
an isoprene attachment, designated i;
wherein
the isoprene attachment i is substantially unsaturated and B is substantially saturated; and wherein
wherein the oil is present in an amount of from 70 wt.% to 99 wt.% based on the total weight of the cured composition;
the gel composition before curing is thixotropic with a viscosity at 25°C at a shear rate of 20 s⁻¹ ranging from 5000 mPa.s to 30000 mPa.s., as measured using Brookfield viscometer; and
the cured gel composition after curing by thermal curing or UV curing or both, is solid, which means that it is firm and stable in shape, or has a viscosity at 25 °C at a shear rate of 20 s⁻¹ of at least 30000 mPa.s, as measured using Ares rheometer.

2. The cured gel composition of claim 1, wherein the styrenic block copolymer has a total residual unsaturation, as measured by ¹H NMR or ozone titration, of from 0.2 milliequivalents / gram to 4 milliequivalents / gram.

3. The gel composition of any of claims 1-2, wherein the composition after curing has a viscosity at 25 °C at a shear rate of 20 s⁻¹ in the range of 30000 to 500,000 mPa.s, as measured using Ares rheometer.

4. The cured gel composition of any of claims 1-2, wherein the styrenic block copolymer has a structure of ABi or iAB, and wherein the isoprene attachment i has a hydrogenation level of < 50% and the conjugated diene B block has a hydrogenation level of > 90%.

5. The cured gel composition of any of claims 1-2, wherein at least 75% of double bonds present in the conjugated diene B block are hydrogenated;
wherein from 20% to 60% of the double bonds in the isoprene attachment i are hydrogenated; and
wherein a difference in the hydrogenation level of the conjugated diene B block and the hydrogenation level of the isoprene attachment i is greater than 20%.

6. The cured gel composition of any of claims 1-2, wherein the monoalkenyl arene A block comprises styrene, alpha-methylstyrene, para-methylstyrene, vinyl toluene, vinylnaphthalene, diphenyl ethylene, para-butyl styrene, or mixtures thereof.

7. The cured gel composition of any of claims 1-2, wherein the monoalkenyl arene A block has one of an apparent average peak molecular weight, as measured by gel permeation chromatography as polystyrene equivalent molecular weight, of from 5 kg/mol to 40 kg/mol, and a polystyrene content of from 15% to 40%.

8. The cured gel composition of any of claims 1-2, wherein the conjugated diene B block comprises conjugated 1,3-butadiene or conjugated substituted butadienes such as, piperylene, 2,3-dimethyl-1,3-butadiene, 1-phenyl-1,3-butadiene or mixtures thereof, and has an apparent average peak molecular weight of from 30 kg/mol to 150 kg/mol, as measured by gel permeation chromatography as polystyrene equivalent molecular weight.

9. The cured gel composition of any of claims 1-2, wherein the isoprene attachment i has an apparent average peak molecular weight of from 2 kg/mol to 15 kg/mol, as measured by gel permeation chromatography as polystyrene equivalent molecular weight.

10. The cured gel composition of any of claims 1-2, wherein the oil comprises a paraffin, a mineral oil, a gas-to-liquid oil, a synthetic oil, or combinations thereof.

11. The cured gel composition of any of claims 1-2, wherein the optional additives comprise an antioxidant, a metal deactivator, a curing accelerator, a rheology modifier, or combinations thereof.

12. A method for making a cured gel composition comprising:
a) providing a styrenic block copolymer having a structure ABi or iAB, the styrene block compolymer comprising:
a diblock polymer having a monoalkenyl arene block, designated A, which has an apparent average peak molecular weight of 3 kg/mole to 100 kg/mol as measured by gel permeation chromatography as polystyrene equivalent molecular weight;
a conjugated diene block, designated B, which has an apparent average peak molecular weight of 30 kg/mol to 300 kg/mol as measured by gel permeation chromatography as polystyrene equivalent molecular weight and
an isoprene attachment, designated i,
wherein i is substantially unsaturated and B is substantially saturated; and
b) providing in an amount of from 70 wt.% to 99 wt.% based on the total weight of the cured composition an oil and optional additives;
c) mixing the styrenic block copolymer with the oil and optional additives;
d) curing the mixture by any of UV irradiation, thermal treatment, or both, forming the cured gel composition;
wherein
the gel composition before curing is thixotropic with a viscosity at 25°C at a shear rate of 20 s⁻¹ ranging from 5000 mPa.s to 30000 mPa.s., as measured using Brookfield viscometer; and
the cured gel composition after curing is solid, which means that it is firm and stable in shape, or has a viscosity at 25 °C at a shear rate of 20 s⁻¹ of at least 30000 mPa.s, as measured using Ares rheometer.

13. The method of claim 12, wherein curing of the mixture is carried out by UV irradiation in the presence of a curable functional compound selected from the group of: 1,4-butanediol diacrylate, 1,6-hexanediol diacrylate, 1,6-hexanediol dimethacrylate, 1,12-dodecanediol dimethacrylate, trimethylol propane triacrylate, dipentaerythritol monohydroxy-pentaacrylate or combinations thereof.

14. The method of claim 12, wherein curing of the composition is carried out by thermal treatment in the presence of an initiator with a half-life of from 1 minute to 10 minutes;
wherein the initiator is selected from 2'-azobis(isobutyronitri-le); 2,2'-azobis(2,4-dimethylvaleronitrile); 1,1'-azobis-(cyclohexanecarbo-nitrile); benzoyl peroxide; t-butyl 2-methylperbenzoate; dicumyl peroxide; t-butyl cumyl peroxide; di-t-butylperoxide; 1,1-di(t-butyl-peroxy)-3,3,5-trimethylcyclohexane; dilauroyl peroxide; di(2-ethylhexyl)peroxydicarbonat-e; t-amyl peroctoate; t-butyl peracetate; t-butyl perbenzoate; 2,5-bis(benzoyl-peroxy)-2,5-dimethylhexane; dit-butyldiperoxyazelate; 1,1-di(t-butylperoxy)cyclohexane, and combinations thereof.

## Patentansprüche

1. Gehärtete Gelzusammensetzung, umfassend: (i) ein Styrol-Block-Copolymer, (ii) ein Öl; und (iii) optionale Additive;
wobei das Styrol-Block-Copolymer die Struktur ABi oder iAB aufweist und umfasst:
einen Monoalkenylarenblock, bezeichnet mit A, der ein scheinbares mittleres Peak-Molekulargewicht von 3 kg/mol bis 100 kg/mol, gemessen mittels Gelpermeationschromatographie als Polystyrol-Äquivalentmolekulargewicht, aufweist;
einen konjugierten Dienblock, bezeichnet mit B, der ein scheinbares mittleres Peak-Molekulargewicht von 30 kg/mol bis 300 kg/mol, gemessen mittels Gelpermeationschromatographie als Polystyrol-Äquivalentmolekulargewicht, aufweist;
einen Isopren-Anhang, bezeichnet mit i;
wobei
der Isopren-Anhang i im Wesentlichen ungesättigt ist und B im Wesentlichen gesättigt ist; und wobei
das Öl in einer Menge von 70 Gew.-% bis 99 Gew.-%, bezogen auf das Gesamtgewicht der gehärteten Zusammensetzung, vorhanden ist;
die Gelzusammensetzung vor dem Härten thixotrop ist, mit einer Viskosität bei 25°C bei einer Scherrate von 20 s⁻¹ im Bereich von 5000 mPa·s bis 30000 mPa·s, gemessen mit einem Brookfield-Viskosimeter; und
die gehärtete Gelzusammensetzung nach dem Härten durch thermische Härtung oder UV-Härtung oder beides fest ist, was bedeutet, dass sie fest und formstabil ist oder eine Viskosität bei 25°C bei einer Scherrate von 20 s⁻¹ von zumindest 30000 mPa·s, gemessen mit einem Ares-Rheometer, aufweist.

2. Gehärtete Gelzusammensetzung nach Anspruch 1, wobei das Styrol-Block-Copolymer eine Gesamt-Restungesättigtheit, gemessen mittels ¹H-NMR oder Ozontitration, von 0,2 Milliäquivalenten/Gramm bis 4 Milliäquivalenten/Gramm aufweist.

3. Gelzusammensetzung nach einem der Ansprüche 1 bis 2, wobei die Zusammensetzung nach dem Härten eine Viskosität bei 25°C bei einer Scherrate von 20 s⁻¹ im Bereich von 30000 bis 500.000 mPa·s, gemessen mit einem Ares-Rheometer, aufweist.

4. Gehärtete Gelzusammensetzung nach einem der Ansprüche 1 bis 2, wobei das Styrol-Block-Copolymer eine Struktur von ABi oder iAB aufweist und wobei der Isopren-Anhang i einen Hydrierungsgrad von < 50 % aufweist und der konjugierte Dien-B-Block einen Hydrierungsgrad von > 90 % aufweist.

5. Gehärtete Gelzusammensetzung nach einem der Ansprüche 1 bis 2, wobei zumindest 75 % der Doppelbindungen, die in dem konjugierten Dien-B-Block vorhanden sind, hydriert sind;
wobei 20 % bis 60 % der Doppelbindungen in dem Isopren-Anhang i hydriert sind; und
wobei eine Differenz zwischen dem Hydrierungsgrad des konjugierten Dien-B-Blocks und dem Hydrierungsgrad des Isopren-Anhangs i größer als 20 % ist.

6. Gehärtete Gelzusammensetzung nach einem der Ansprüche 1 bis 2, wobei der Monoalkenylaren-A-Block Styrol, alpha-Methylstyrol, para-Methylstyrol, Vinyltoluol, Vinylnaphthalin, Diphenylethylen, para-Butylstyrol oder Gemische davon umfasst.

7. Gehärtete Gelzusammensetzung nach einem der Ansprüche 1 bis 2, wobei der Monoalkenylaren-A-Block eines von einem scheinbaren mittleren Peak-Molekulargewicht, gemessen mittels Gelpermeationschromatographie als Polystyrol-Äquivalentmolekulargewicht, von 5 kg/mol bis 40 kg/mol und einem Polystyrolgehalt von 15 % bis 40 % aufweist.

8. Gehärtete Gelzusammensetzung nach einem der Ansprüche 1 bis 2, wobei der konjugierte Dien-B-Block konjugiertes 1,3-Butadien oder konjugierte substituierte Butadiene, wie etwa Piperylen, 2,3-Dimethyl-1,3-butadien, 1-Phenyl-1,3-butadien oder Gemische davon, umfasst und ein scheinbares mittleres Peak-Molekulargewicht von 30 kg/mol bis 150 kg/mol, gemessen mittels Gelpermeationschromatographie als Polystyrol-Äquivalentmolekulargewicht, aufweist.

9. Gehärtete Gelzusammensetzung nach einem der Ansprüche 1 bis 2, wobei der Isopren-Anhang i ein scheinbares mittleres Peak-Molekulargewicht von 2 kg/mol bis 15 kg/mol, gemessen mittels Gelpermeationschromatographie als Polystyrol-Äquivalentmolekulargewicht, aufweist.

10. Gehärtete Gelzusammensetzung nach einem der Ansprüche 1 bis 2, wobei das Öl ein Paraffin, ein Mineralöl, ein Gas-to-Liquid-Öl, ein synthetisches Öl oder Kombinationen davon umfasst.

11. Gehärtete Gelzusammensetzung nach einem der Ansprüche 1 bis 2, wobei die optionalen Additive ein Antioxidans, einen Metalldeaktivator, einen Härtungsbeschleuniger, einen Rheologiemodifikator oder Kombinationen davon umfassen.

12. Verfahren zur Herstellung einer gehärteten Gelzusammensetzung, umfassend:
a) Bereitstellen eines Styrol-Block-Copolymers mit einer Struktur ABi oder iAB, wobei das Styrol-Block-Copolymer umfasst:
ein Diblockpolymer mit
einem Monoalkenylarenblock, bezeichnet als A, der ein scheinbares mittleres Peak-Molekulargewicht von 3 kg/mol bis 100 kg/mol, gemessen mittels Gelpermeationschromatographie als Polystyrol-Äquivalentmolekulargewicht, aufweist;
einem konjugierten Dienblock, bezeichnet als B, der ein scheinbares mittleres Peak-Molekulargewicht von 30 kg/mol bis 300 kg/mol, gemessen mittels Gelpermeationschromatographie als Polystyrol-Äquivalentmolekulargewicht, aufweist, und einem Isopren-Anhang, bezeichnet mit i,
wobei i im Wesentlichen ungesättigt ist und B im Wesentlichen gesättigt ist; und
b) Bereitstellen eines Öls und optionaler Additive in einer Menge von 70 Gew.-% bis 99 Gew.-%, bezogen auf das Gesamtgewicht der gehärteten Zusammensetzung;
c) Vermischen des Styrol-Block-Copolymers mit dem Öl und optionalen Additiven;
d) Härten des Gemisches durch UV-Bestrahlung, thermische Behandlung oder beides, wodurch die gehärtete Gelzusammensetzung gebildet wird;
wobei
die Gelzusammensetzung vor dem Härten thixotrop ist, mit einer Viskosität bei 25°C bei einer Scherrate von 20 s⁻¹ im Bereich von 5000 mPa·s bis 30000 mPa·s, gemessen mit einem Brookfield-Viskosimeter; und die gehärtete Gelzusammensetzung nach dem Härten fest ist, was bedeutet, dass sie fest und formstabil ist, oder eine Viskosität bei 25°C bei einer Scherrate von 20 s⁻¹ von zumindest 30000 mPa·s, gemessen mit einem Ares-Rheometer, aufweist.

13. Verfahren nach Anspruch 12, wobei das Härten des Gemisches durch UV-Bestrahlung in Gegenwart einer härtbaren funktionellen Verbindung, die ausgewählt ist aus der Gruppe von: 1,4-Butandioldiacrylat, 1,6-Hexandioldiacrylat, 1,6-Hexandioldimethacrylat, 1,12-Dodecandioldimethacrylat, Trimethylolpropantriacrylat, Dipentaerythritolmonohydroxypentaacrylat oder Kombinationen davon, durchgeführt wird.

14. Verfahren nach Anspruch 12, wobei das Härten der Zusammensetzung durch thermische Behandlung in Gegenwart eines Initiators mit einer Halbwertszeit von 1 Minute bis 10 Minuten durchgeführt wird;
wobei der Initiator ausgewählt ist aus 2'-Azobis(isobutyronitril); 2,2'-Azobis(2,4-dimethylvaleronitril); 1,1'-Azobis-(cyclohexancarbonitril); Benzoylperoxid; t-Butyl-2-methylperbenzoat; Dicumylperoxid; t-Butylcumylperoxid; Di-t-butylperoxid; 1,1-Di(t-butylperoxy)-3,3,5-trimethylcyclohexan; Dilauroylperoxid; Di(2-ethylhexyl)peroxydicarbonat; t-Amylperoctoat; t-Butylperacetat; t-Butylperbenzoat; 2,5-Bis(benzoylperoxy)-2,5-dimethylhexan; Di-t-butyldiperoxyazelat; 1,1-Di(t-butylperoxy)cyclohexan und Kombinationen davon.

## Revendications

1. Composition de gel durcie comprenant : (i) un copolymère séquencé styrénique, (ii) une huile ; et (iii) des additifs facultatifs ;
dans laquelle le copolymère séquencé styrénique présente la structure ABi ou iAB et comprend :
une séquence arène monoalcényle, désignée par A, qui présente une masse moléculaire moyenne de pic apparente de 3 kg/mole à 100 kg/mole, telle que mesurée par chromatographie par perméation sur gel en tant que masse moléculaire équivalente en polystyrène ;
une séquence diène conjugué, désignée par B, qui présente une masse moléculaire moyenne de pic apparente de 30 kg/mole à 300 kg/mole, telle que mesurée par chromatographie par perméation sur gel en tant que masse moléculaire équivalente en polystyrène ;
une fixation isoprène, désignée par i ;
dans laquelle
la fixation isoprène i est sensiblement insaturée et B est sensiblement saturée ;
et dans laquelle
dans laquelle l'huile est présente en une quantité allant de 70 % en poids à 99 % en poids par rapport au poids total de la composition durcie ;
la composition de gel avant durcissement est thixotropique avec une viscosité à 25 °C à une vitesse de cisaillement de 20 s⁻¹ allant de 5 000 mPa.s à 30 000 mPa.s, telle que mesurée à l'aide d'un viscosimètre Brookfield ; et
la composition de gel durcie après durcissement par thermodurcissement ou durcissement aux UV ou les deux, est solide, ce qui signifie qu'elle est ferme et de forme stable, ou présente une viscosité à 25 °C à une vitesse de cisaillement de 20 s⁻¹ d'au moins 30 000 mPa.s, telle que mesurée à l'aide d'un rhéomètre Ares.

2. Composition de gel durcie selon la revendication 1, dans laquelle le copolymère séquencé styrénique présente une insaturation résiduelle totale, telle que mesurée par titrage RMN ¹H ou ozone, de 0,2 milliéquivalent/gramme à 4 milliéquivalents/gramme.

3. Composition de gel selon l'une quelconque des revendications 1-2, dans laquelle la composition après durcissement présente une viscosité à 25 °C à une vitesse de cisaillement de 20 s⁻¹ dans la plage de 30 000 à 500 000 mPa.s, telle que mesurée à l'aide d'un rhéomètre Ares.

4. Composition de gel durcie selon l'une quelconque des revendications 1-2, dans laquelle le copolymère séquencé styrénique présente une structure ABi ou iAB, et dans laquelle la fixation isoprène i présente un niveau d'hydrogénation < 50 % et la séquence diène conjugué B présente un niveau d'hydrogénation > 90 %.

5. Composition de gel durcie selon l'une quelconque des revendications 1-2, dans laquelle au moins 75 % des doubles liaisons présentes dans la séquence diène conjugué B sont hydrogénées ;
dans laquelle de 20 % à 60 % des doubles liaisons dans la fixation isoprène i sont hydrogénées ; et
dans laquelle une différence entre le niveau d'hydrogénation de la séquence diène conjugué B et le niveau d'hydrogénation de la fixation isoprène i est supérieure à 20 %.

6. Composition de gel durcie selon l'une quelconque des revendications 1-2, dans laquelle la séquence arène monoalcényle A comprend du styrène, de l'alphaméthylstyrène, du para-méthylstyrène, du vinyltoluène, du vinylnaphtalène, de l'éthylène diphényls, du para-butyl-styrène, ou des mélanges de ceux-ci.

7. Composition de gel durcie selon l'une quelconque des revendications 1-2, dans laquelle la séquence arène monoalcényle A présente une masse moléculaire moyenne de pic apparente, telle que mesurée par chromatographie par perméation sur gel en tant que masse moléculaire équivalente de polystyrène, de 5 kg/mole à 40 kg/mole, et une teneur en polystyrène de 15 % à 40 %.

8. Composition de gel durcie selon l'une quelconque des revendications 1-2, dans laquelle la séquence diène conjugué B comprend du 1,3-butadiène conjugué ou des butadiènes substitués conjugués tels que du pipérylène, du 2,3-diméthyl-1,3-butadiène, du 1-phényl-1,3-butadiène ou des mélanges de ceux-ci, et présente une masse moléculaire moyenne de pic apparente de 30 kg/mole à 150 kg/mole, telle que mesurée par chromatographie par perméation sur gel en tant que masse moléculaire équivalente de polystyrène.

9. Composition de gel durcie selon l'une quelconque des revendications 1-2, dans laquelle la fixation isoprène i présente une masse moléculaire moyenne de pic apparente de 2 kg/mole à 15 kg/mole, telle que mesurée par chromatographie par perméation sur gel en tant que masse moléculaire équivalente de polystyrène.

10. Composition de gel durcie selon l'une quelconque des revendications 1-2, dans laquelle l'huile comprend une paraffine, une huile minérale, une huile gaz-liquide, une huile synthétique ou des combinaisons de celles-ci.

11. Composition de gel durcie selon l'une quelconque des revendications 1-2, dans laquelle les additifs facultatifs comprennent un antioxydant, un désactivateur de métal, un accélérateur de durcissement, un modificateur de rhéologie ou des combinaisons de ceux-ci.

12. Procédé de fabrication d'une composition de gel durcie comprenant :
a) la fourniture d'un copolymère séquencé styrénique présentant une structure ABi ou iAB, le copolymère séquencé styrénique comprenant :
un polymère biséquencé présentant une séquence arène monoalcényle, désignée par A, qui présente une masse moléculaire moyenne de pic apparente de 3 kg/mole à 100 kg/mole, telle que mesurée par chromatographie par perméation sur gel en tant que masse moléculaire équivalente de polystyrène ;
une séquence diène conjugué, désignée par B, qui présente une masse moléculaire moyenne de pic apparente de 30 kg/mole à 300 kg/mole, telle que mesurée par chromatographie par perméation sur gel en masse moléculaire équivalente de polystyrène et
une fixation isoprène, désignée par i,
dans lequel i est sensiblement insaturée et B est sensiblement saturée ; et
b) la fourniture, en une quantité de 70 % en poids à 99 % en poids par rapport au poids total de la composition durcie, d'une huile et d'additifs facultatifs ;
c) le mélange du copolymère séquencé styrénique avec l'huile et les additifs facultatifs ;
d) le durcissement du mélange par l'un quelconque parmi une exposition UV, un traitement thermique ou les deux, formant la composition de gel durcie ;
dans lequel
la composition de gel avant durcissement est thixotropique avec une viscosité à 25 °C à une vitesse de cisaillement de 20 s⁻¹ allant de 5 000 mPa.s à 30 000 mPa.s, telle que mesurée à l'aide d'un viscosimètre Brookfield ; et
la composition de gel durcie après durcissement est solide, ce qui signifie qu'elle est ferme et de forme stable, ou qu'elle présente une viscosité à 25 °C à une vitesse de cisaillement de 20 s⁻¹ d'au moins 30 000 mPa.s, telle que mesurée à l'aide d'un rhéomètre Ares.

13. Procédé selon la revendication 12, dans lequel le durcissement du mélange est effectué par exposition aux UV en présence d'un composé fonctionnel durcissable choisi dans le groupe consistant en : diacrylate de 1,4-butanediol, diacrylate de 1,6-hexanediol, diméthacrylate de 1,6-hexanediol, diméthacrylate de 1,12-dodécanediol, triacrylate de triméthylol propane, monohydroxy-pentaacrylate de dipentaérythritol ou des combinaisons de ceux-ci.

14. Procédé selon la revendication 12, dans lequel le durcissement de la composition est effectué par traitement thermique en présence d'un initiateur présentant une demivie de 1 minute à 10 minutes ;
dans lequel l'initiateur est choisi parmi le 2'-azobis(isobutyronitrile) ; le 2,2'-azobis(2,4-diméthylvaléronitrile) ; le 1,1'-azobis-(cyclohexanecarbonitrile) ; le peroxyde de benzoyle ; le 2-méthylperbenzoate de t-butyle ; le peroxyde de dicumyle ; le peroxyde de t-butyle cumyle ; le di-t-butylperoxyde ; le 1,1-di(t-butylperoxy)-3,3,5-triméthylcyclohexane ; le peroxyde de dilauroyle ; le di(2-éthylhexyl)peroxydicarbonate ; le peroctoate de t-amyle ; le peracétate de t-butyle ; le perbenzoate de t-butyle ; le 2,5-bis(benzoyl-peroxy)-2,5-diméthylhexane ; le di-t-butyldiperoxyazélate ; le 1,1-di(t-butylperoxy)cyclohexane, et des combinaisons de ceux-ci.
